(19) **Europäisches Patentamt / European Patent Office / Office européen des brevets**

(11) **EP 2 391 520 B1**

(12) **FASCICULE DE BREVET EUROPEEN**

(45) Date de publication et mention de la délivrance du brevet:
**11.02.2015 Bulletin 2015/07**

(21) Numéro de dépôt: **09806109.6**

(22) Date de dépôt: **24.12.2009**

(51) Int Cl.:
**B60K 6/48** *(2007.10)*  **B60W 20/00** *(2006.01)*

(86) Numéro de dépôt international:
**PCT/FR2009/052696**

(87) Numéro de publication internationale:
**WO 2010/086521 (05.08.2010 Gazette 2010/31)**

(54) **PROCEDE DE GESTION D'ENERGIE D'UNE CHAINE DE TRACTION D'UN VEHICULE AUTOMOBILE HYBRIDE**

VERFAHREN ZUR VERWALTUNG DES ANTRIEBS VON EINEM ANTRIEBSSTRANG EINES FAHRZEUGS MIT HYBRIDMOTOR

METHOD FOR MANAGING THE POWER FROM A POWER TRAIN OF A HYBRID MOTOR VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.01.2009  FR 0950563**

(43) Date de publication de la demande:
**07.12.2011  Bulletin 2011/49**

(73) Titulaire: **Peugeot Citroën Automobiles SA**
**78140 Vélizy-Villacoublay (FR)**

(72) Inventeurs:
• **JALJAL, Nawal**
  **92400 Courbevoie (FR)**
• **MERCIER-CALVAIRAC, Fabien**
  **F-75020 Paris (FR)**
• **MULOT, Vincent**
  **F-75013 Paris (FR)**
• **LAGONOTTE, Patrick**
  **F-86961 Futuroscope Chasseneuil Cedex (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
FR-A1- 2 907 745    GB-A- 2 416 631
US-A1- 2005 038 576    US-B1- 6 201 312

**Description**

La présente invention concerne, d'une façon générale, un procédé et un dispositif de gestion d'énergie d'une chaîne de traction d'un véhicule automobile hybride prenant en compte un ou des paramètres de fonctionnement d'au moins un élément présent dans cette chaîne.

Ces procédé et dispositif de gestion d'énergie d'une chaîne de traction d'un véhicule hybride avec prise en compte d'un ou de paramètres d'au moins un élément présent dans cette chaîne permettent d'augmenter les prestations électriques de celle-ci, tout en minimisant la consommation de carburant et en préservant la durée de vie de son système de stockage d'énergie en usage réel.

De manière avantageuse mais non limitative, le ou un des paramètres de fonctionnement est la température respective d'au moins un ou une partie des éléments présents dans cette chaîne.

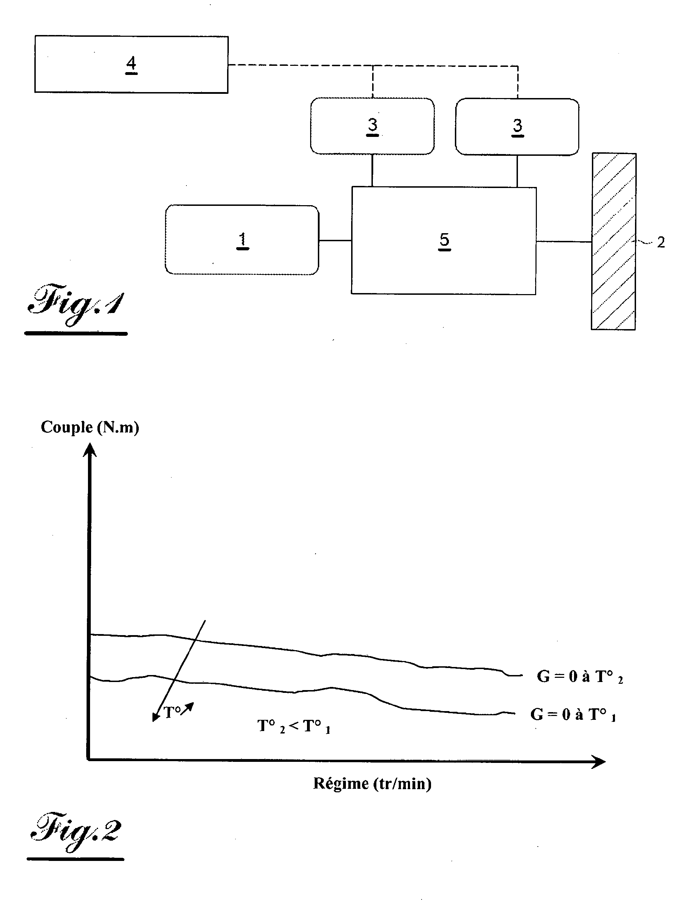

Une chaîne de traction hybride, selon l'état de la technique est illustrée schématiquement à la figure 1.

Une telle chaîne de traction comporte, de manière connue, un moteur thermique 1 fournissant une énergie mécanique aux roues motrices 2 du véhicule, sur la figure une seule roue 2 est représentée, une ou plusieurs machines électriques 3, à la figure 1 deux machines sont représentées, au moins une de ces machines 3 pouvant agir comme moteur électrique et fournir une énergie électrique aux roues 2 du véhicule. La chaîne de traction comprend aussi des moyens de stockage 4 de l'énergie électrique, à la figure reliés en lignes en pointillés aux machines électriques 3, ainsi que des moyens de transmission 5 des énergies mécanique et électrique aux roues 2 du véhicule.

Ces moyens de transmission 5 comprennent par exemple des éléments de liaison mécanique comme engrenages, embrayages, trains épicycloïdaux etc...

De plus, une telle chaîne comprend en général des moyens de récupération d'énergie électrique, ces moyens pouvant être compris dans au moins une des deux machines électriques 3. Ainsi, de tels moyens de récupération d'énergie peuvent comprendre, par exemple, une machine électrique fonctionnant en générateur de courant au moment d'une décélération, ladite machine fonctionnant en générateur transformant l'énergie mécanique et/ou cinétique reçue des roues en énergie électrique.

Il est connu, notamment du document WO-A-2008/053107, d'effectuer une régulation de traction d'un véhicule hybride avec la chaîne de traction décrite ci-dessus, en sélectionnant le mode de traction soit thermique ou soit électrique en fonction d'un gain de consommation calculé en temps réel à partir d'une consommation qui correspond à une caractéristique des moteurs thermiques connue sous l'appellation de consommation marginale.

Si ce type de régulation a donné satisfaction dans de nombreux cas de figure de fonctionnement de la chaîne de traction, cette régulation ne prend cependant pas en compte l'état d'un paramètre de fonctionnement d'au moins un des différents éléments de la chaîne de traction, par exemple l'état thermique d'un ou d'une partie de ceux-ci.

Une telle régulation s'est avérée particulièrement déficiente pour des fonctionnements de la chaîne de traction se déroulant peu après le démarrage du véhicule, c'est-à-dire pour des zones transitoires de fonctionnement de la chaîne, où les divers éléments 1 à 5, présents dans la chaîne de traction, n'ont pas atteint leur température de fonctionnement normal.

En effet, l'état thermique de la machine électrique 3 et du système de stockage 4 de l'énergie électrique influe sur les pertes et sur la puissance électrique disponible, de même que l'état thermique du moteur thermique 1 et des moyens de transmission 5.

L'analyse de la surconsommation des moteurs à combustion interne corrobore le caractère prépondérant des paramètres thermiques associés aux trajets sur courtes distances conduisant à une surconsommation importante par rapport à un fonctionnement à moteur thermique à chaud, c'est à dire ayant atteint une température minimale de fonctionnement normal.

Les rendements d'un moteur électrique et d'un moteur thermique sont influencés de manière inverse par leur température de fonctionnement. Le moteur électrique a un meilleur rendement à froid alors que le moteur thermique fonctionne de manière optimale à chaud.

La prise en compte de l'état thermique d'au moins un des différents éléments d'une chaîne de traction d'un véhicule pour le calcul du gain de consommation de cette chaîne est donc particulièrement pertinente pour ces trajets sur courtes distances.

Or, les trajets sur courtes distances qui s'effectuent souvent en conditions thermiques transitoires de la chaîne de traction représentent une part importante des trajets d'un véhicule automobile. Il a été constaté que la longueur moyenne d'un trajet quotidien est inférieure à 8,5 km et que sa durée moyenne est inférieure à 12 minutes. Ces données statistiques permettent de mettre en lumière l'importance de la thermique dans l'optimisation énergétique d'un véhicule en usage réel.

Le but de la présente invention est de prendre en compte dans un procédé de gestion du fonctionnement de la chaîne de traction d'un véhicule hybride, l'état d'un ou de paramètres de fonctionnement d'au moins un ou une partie des éléments présents dans cette chaîne.

A cet effet, l'invention a pour objet un procédé de gestion d'énergie d'une chaîne de traction d'un véhicule hybride comportant un moteur thermique et au moins une machine électrique pouvant servir de moteur électrique, selon la revendication 1.

Selon des caractéristiques additionnelles de la présente invention :

- le gain s'exprime de façon suivante :

$$G_{(g/s)} = Conso - Conso_{équivalente}$$

où

Conso : la consommation du moteur thermique,

Consoéquivalente : la consommation estimée du moteur électrique qu'il aurait dans les mêmes conditions de fonctionnement, cette consommation étant égale à la puissance à la roue, augmentée des pertes dans la chaîne électrique lors de la décharge et de la recharge, multiplié par un coefficient de proportionnalité K, défini par cartographie prédéterminée du moteur thermique,

- quand ladite chaîne de traction comporte dans ses éléments des moyens de récupération d'énergie et des moyens de stockage d'énergie, le procédé comprend une étape d'arrêt ou de fonctionnement du moteur thermique en fonction d'un ou de critères ainsi que du gain de consommation G, une condition nécessaire mais non suffisante pour l'arrêt du moteur thermique étant un gain de consommation positif,

- le procédé comprend une étape de maintien du moteur thermique en fonctionnement même si le gain est positif, le critère ou l'un des critères de fonctionnement étant dépendant de la température caractéristique du moteur thermique, ledit critère impliquant la suspension de l'arrêt du moteur thermique tant que la température caractéristique n'a pas atteint une valeur prédéterminée,

- le procédé comprend une étape de maintien du moteur thermique en fonctionnement même si le gain est positif, le critère ou l'un des critères étant dépendant du niveau de récupération des moyens de récupération d'énergie électrique et/ou des moyens de stockage d'énergie électrique, ce critère impliquant la suspension de l'arrêt du moteur thermique tant que l'énergie électrique stockée dans les moyens de stockage d'énergie n'a pas atteint une valeur prédéterminée,

- quand au moins un groupe moto-ventilateur est prévu pour le refroidissement du moteur thermique, le procédé comprend une étape de régulation de la puissance et/ou de la fréquence de déclenchement du groupe ou des groupes moto-ventilateurs pour le refroidissement du moteur thermique afin que la température de celui-ci ne descende pas en dessous d'une température prédéterminée, notamment lorsqu'il est à l'arrêt provisoire.

L'invention va maintenant être décrite plus en détail mais de façon non limitative en regard des figures annexées, dans lesquelles :

- la figure 1 est une représentation schématique d'une chaîne de traction d'un véhicule automobile hybride montrant divers éléments la composant, cette chaîne étant connue de l'état de la technique,

- la figure 2 est une représentation schématique de courbes de couple moteur en fonction du régime moteur pour différentes températures de fonctionnement de celui-ci et à gain de consommation nul.

La figure 1 a déjà été décrite dans la partie introductive de la présente description.

Dans ce qui va suivre, les divers éléments de la chaîne de traction du véhicule hybride seront référencés en regard de la figure 1.

De plus, le paramètre de fonctionnement pour la gestion de l'énergie dans la chaîne de traction du véhicule ci-après décrit, va être l'état thermique d'au moins un ou d'une partie des éléments de cette chaîne. Il est à garder à l'esprit que la température est un paramètre avantageux pour piloter la gestion de l'énergie dans cette chaîne mais qu'elle n'est pas le seul paramètre à prendre en ligne de compte ou/et qu'elle peut aussi être associée à un ou plusieurs paramètres supplémentaires de fonctionnement de cet ou d'une partie des éléments de ladite chaîne.

La présente invention est relative à un procédé de gestion d'énergie d'une chaîne de traction d'un véhicule hybride comportant un moteur thermique 1 et au moins une machine électrique 3 pouvant servir de moteur électrique.

Ce procédé comporte une étape de détermination en temps réel du gain G de consommation en carburant du moteur thermique 1, ce gain G étant montré à une valeur nulle aux courbes de la figure 2, en effectuant la différence entre consommation en mode thermique et consommation en mode électrique.

De manière connue, le gain G en consommation de carburant se calcule selon la formule :

$$G_{(g/s)} = Conso - Conso_{équivalente}$$

où Conso est la consommation du moteur thermique lors de son fonctionnement,
et Conso$_{équivalente}$ la consommation estimée du moteur électrique qu'il aurait dans les mêmes conditions de fonctionnement.

Selon la présente invention, le procédé de gestion d'énergie est entre autres caractérisé en ce que la détermination du gain G en consommation est fonction d'un ou de paramètres de fonctionnement d'au moins un ou une partie des éléments 1 à 5, illustrés à la figure 1, de la chaîne de traction.

Avantageusement, quand la chaîne de traction comporte des moyens de récupération d'énergie et des moyens 4 de stockage d'énergie, ledit procédé est caractérisé en ce qu'il comprend une étape d'arrêt ou de fonctionnement du moteur thermique 1 en fonction d'un ou de critères et du gain de consommation G, une condition nécessaire mais non suffisante pour l'arrêt du moteur thermique étant un gain de consommation positif.

La température respective d'au moins un ou une partie des éléments 1 à 5 est le paramètre des conditions de fonctionnement le plus pertinent à prendre en compte, notamment dans les phases transitoires de fonctionnement du moteur, par exemple juste après démarrage de celui-ci.

La température peut aussi être prise en combinaison avec au moins un autre paramètre de fonctionnement pour la détermination de la consommation équivalente Conso$_{équivalente}$.

Avantageusement, après détermination du gain G de consommation, donné par la différence entre la consommation Conso du moteur thermique allumé et la consommation équivalente Conso$_{équivalente}$ extrapolant un arrêt du moteur thermique, donc avec chaîne de traction électrique, si ce gain est positif la décision d'arrêter le moteur thermique 1 est prise et la chaîne de traction devient électrique.

Cependant, comme précédemment mentionné, ceci peut aussi être effectué ou non en respect d'un critère ou de critères, par exemple ce critère dépendant du niveau de récupération des moyens de récupération d'énergie électrique et/ou de la température d'au moins une partie des éléments 1 à 5 de la chaîne de traction.

Dans un premier mode de réalisation de la présente invention, ce critère, en combinaison ou non avec d'autres critères de fonctionnement, est dépendant de la température caractéristique du moteur thermique 1, ledit critère impliquant la suspension de l'arrêt du moteur thermique 1 tant que sa température caractéristique n'a pas atteint une valeur prédéterminée.

Dans un second mode de réalisation de la présente invention, ce critère, en combinaison ou non avec d'autres critères, est déterminé de manière à accroître l'utilisation des moyens de stockage 4 d'énergie électrique tout en arrêtant le plus souvent possible le moteur thermique 1, ce qui permet un compromis entre économie de carburant par arrêt de moteur thermique 1 et recharge des moyens de récupération d'énergie électrique qui peuvent nécessiter un fonctionnement de ce moteur thermique 1.

La consommation équivalente Conso$_{équivalente}$ avec le moteur thermique 1 éteint, c'est-à-dire en chaîne de traction électrique, est estimée selon le raisonnement suivant.

Lors de la traction électrique pure, la consommation Conso réelle du moteur thermique 1 est nulle, mais le système de stockage 4 d'énergie électrique, par exemple sous forme d'une ou de batteries, source de puissance du moteur électrique 3, se décharge. Cette décharge est égale à la puissance nécessaire à la roue 2 pour assurer la traction, aux pertes de transmission près.

Etant donné que la seule source d'énergie est le moteur thermique 1, la ou les batteries en tant que moyens de stockage 4 ne servant que de relais, cette décharge en traction électrique pure doit être compensée par une recharge ultérieure lorsque le moteur thermique 1 sera rallumé.

Avec l'approximation qu'une différence de puissance du moteur thermique 1 est proportionnelle au surplus de consommation occasionnée, la consommation équivalente Conso$_{équivalente}$ avec un moteur thermique 1 éteint est égale à la puissance à la roue 2, augmentée des pertes dans la chaîne de traction électrique lors de la décharge et de la recharge des moyens de stockage 4 présents dans cette chaîne, ceci multiplié par un coefficient de proportionnalité K.

En remplaçant la consommation équivalente Conso$_{équivalente}$ dans l'équation précédemment mentionnée, on en déduit le gain G de consommation :

$$G_{(g/s)} = Conso - Conso_{équivalente}$$

$$G_{(g/s)} = Conso - K \left[ \frac{Pmth}{\eta_{elec}} \right]$$

dans laquelle dernière équation :

- Conso est la consommation du moteur thermique 1,
- Pmth = puissance fournie par le moteur thermique
- K = coefficient de proportionnalité défini par cartographie prédéterminée du moteur thermique
- $\eta$elec = rendement de la chaîne électrique. Ce rendement étant fonction d'un ou de paramètres de fonctionnement de la chaîne de traction, de préférence la température respective d'au moins un ou une partie des éléments 1 à 5 de la chaîne de traction.

La consommation Conso du moteur thermique peut être avantageusement calculée à un instant donné par une cartographie de mesures de régime moteur qui donne la consommation du moteur en fonction de sa puissance et de son régime.

G caractérise ainsi le gain de consommation de carburant réalisé par arrêt du moteur thermique 1 et utilisation d'une chaîne de traction électrique pure, cela à un moment donné du parcours du véhicule automobile hybride et en temps réel.

L'équation du gain G, qui détermine avantageusement la gestion des arrêts et démarrages du moteur thermique, fait apparaître ainsi des paramètres physiques qui dépendent de paramètres de fonctionnement de la chaîne et notamment de la température respective d'un ou une partie des éléments 1 à 5 de cette chaîne.

La prise en compte de l'évolution de ce ou ces paramètres, notamment la température, par exemple en phases transitoires thermiques après démarrage du moteur thermique 1, s'effectue selon les données mesurées par des capteurs disposés dans les différents éléments de la chaîne de traction hybride, ces capteurs étant aptes à mesurer la valeur de ce ou de ces paramètres de fonctionnement, par exemple la température.

La stratégie de base du procédé selon la présente invention est avantageusement composée de trois phases :

- la phase marche/arrêt du moteur thermique 1,
- la prise en compte de la récupération d'énergie,
- le choix de la puissance du moteur thermique 1 lorsqu'il est allumé.

Le coeur de la stratégie réside dans la première phase qui est fondée sur le calcul du gain G de consommation à faire pour avantageusement procéder à l'arrêt du moteur thermique 1 à un moment donné du parcours. Pour chaque point de fonctionnement, l'expression de ce gain G fait apparaître des paramètres physiques de fonctionnement qui peuvent dépendre, entre autres, de la température.

Dans le cas où la température est prise comme le ou un des paramètres de fonctionnement, la prise en compte des transitoires thermiques dans la stratégie ne concerne pas la deuxième phase car, de toutes façons, l'énergie récupérée sur le cycle lors des décélérations ou sur toute autre source d'énergie embarquée ou externe doit être utilisée pour rouler en mode électrique pur comme le préconise la stratégie.

La troisième phase concerne la détermination de la puissance du moteur thermique 1, une fois la décision prise de l'allumer. Dans le cas où la récupération ne permet pas de financer la totalité des arrêts du moteur thermique 1 dans les zones intéressantes, c'est-à-dire où le gain G est positif, il est avantageusement procédé à la recharge de la ou des batteries, faisant office généralement de moyens de stockage 4 d'énergie dans la chaîne de traction.

Dans la pratique, le moteur thermique 1 va fournir un complément de puissance afin de recharger cette ou ces batteries et faire revenir son ou leur état de charge dans la zone nominale.

Cette recharge est avantageusement réalisée d'une façon progressive étant donné que les pertes dans la chaîne de traction électrique et l'usure de la batterie sont proportionnelles au carré de la puissance. Simultanément, la recharge de la batterie présente une influence sur la gestion des transitoires thermiques.

Dans le cas où le ou l'un des paramètres de fonctionnement utilisé pour le calcul du gain G est la température, la figure 2 est une représentation schématique de courbes de couple moteur en fonction du régime moteur pour différentes températures de fonctionnement de celui-ci et pour une valeur donnée de gain de consommation. La température de fonctionnement peut être la température caractéristique du moteur thermique 1 ou corrélée à celle-ci, le cas échéant corrigée par rapport à celle-ci.

Sur ces courbes, le gain G, a une valeur nulle, le couple moteur est en ordonnée et est mesurée en newton-mètre tandis que le régime du moteur est mesuré en tours/minute.

Ces diverses courbes, donnant la valeur du couple moteur en fonction du régime moteur, correspondent respectivement à différentes températures de fonctionnement du moteur thermique 1.

Le calcul de la consommation à froid est fondé sur l'augmentation du couple de frottement supplémentaire en transitoires thermiques. L'augmentation de la consommation à froid, correspond alors à une translation de la cartographie de consommation à chaud vers de plus forts couples, comme illustré à la figure 2 où le couple moteur croît quand la température de fonctionnement de celui-ci descend, ceci pour une valeur nulle du gain G et pour une même valeur du régime moteur.

Pour un couple supplémentaire demandé au moteur thermique 1, une fois allumé, afin de recharger les moyens de stockage 4 d'énergie, la surconsommation dépend de l'augmentation du couple.

Le coefficient K, mentionné dans l'équation précédente, ne dépend pas de la température. Ce coefficient est relativement constant selon le régime moteur et le couple moteur ce qui confère à la stratégie à la base du procédé selon la présente invention une précision et une simplicité par rapport à d'autres stratégies prenant en compte le rendement moyen global du moteur, ce rendement variant significativement en fonction du régime et du couple moteur.

Les pertes dans les transmissions sont le deuxième facteur de surconsommation en transitoires thermiques. Cependant, elles figurent dans les deux consommations de l'équation du gain G, Conso et Conso$_{\text{équivalente}}$ précédemment citées, particulièrement dans la valeur de la consommation Conso lors du fonctionnement du moteur thermique 1.

Il n'est donc pas nécessaire d'utiliser la température caractéristique des transmissions comme paramètre de calcul de ces pertes dans le procédé selon l'invention.

Par contre, il est avantageux, selon la présente invention, d'utiliser le paramètre température pour le calcul des pertes de charge et de décharge, en tant que moyens de stockage 4 d'énergie électrique de la chaîne de traction et/ou de la machine électrique 3 servant de générateur électrique à la chaîne de traction du véhicule.

Il est évident que la plage de gain G en consommation offerte par l'optimisation énergétique ne pourra pas dépasser la limite de l'impact direct de la température des organes sur la consommation du véhicule, la consommation agissant au premier ordre sur le calcul du gain contrairement aux autres paramètres de fonctionnement de la chaîne de traction.

A la figure 2 est représentée une zone de traction électrique.

A cette figure 2, l'impact de la température caractéristique du moteur thermique 1 ou de la valeur corrigée de celle-ci est visible sur la taille de la zone de traction électrique.

Plus la température T est basse, plus les pertes par frottement sont élevées au sein du moteur thermique 1, et plus ce moteur est mauvais en rendement par rapport au moteur électrique pour la chaîne de traction. Cela donne ainsi de plus grandes zones de traction électrique, plus la température caractéristique du moteur thermique est basse.

La stratégie de recharge des moyens de stockage 4 d'énergie consiste dans le choix de la puissance du moteur thermique 1 lorsqu'il est allumé. La prise en compte de l'état thermique pour au moins un ou une partie des éléments 1 à 5 de la chaîne de traction dans le calcul du gain de consommation G implique une augmentation significative, de l'ordre de 10% sur cycle MVEG, de la traction en mode électrique. Il est rappelé que le cycle MVEG est un cycle d'homologation en Europe concernant la consommation en carburant et l'émission de gaz de combustion. Ce cycle comprend une partie urbaine et une partie extra-urbaine dont les vitesses moyennes sont 18,8 et 62,6 km/h. Le cycle MVEG est effectué avec un démarrage avec un moteur froid à la température de 20°C.

Afin de privilégier en même temps la montée en température du moteur thermique 1 pour faire baisser la consommation, il est préférable d'utiliser une gestion thermique, si besoin est en parallèle avec une minimisation des pertes de recharge.

Dans le contexte d'un démarrage du véhicule à froid, dès que la demande du conducteur ou le niveau de charge des moyens de stockage 4 d'énergie nécessitera un démarrage du moteur thermique 1, son extinction pourra être interdite tant que son niveau de température caractéristique n'aura pas atteint un seuil déterminé.

Il est avantageux, notamment lors des phases d'arrêt du moteur thermique 1, de maintenir la température de celui-ci au-dessus du seuil défini en veillant notamment à ce que le circuit de refroidissement et la fréquence de déclenchement du groupe ou des groupes moto-ventilateurs par la machine électrique 3 et l'électronique n'induisent pas un refroidissement significatif du moteur thermique 1 lorsqu'il est à l'arrêt.

La ventilation naturelle du compartiment moteur et les demandes éventuelles de chauffage de l'habitacle en mode électrique pur et à l'arrêt induiront cependant une chute de la température d'eau de refroidissement du moteur thermique 1 qui pourra être tolérée jusqu'à un seuil, dont la valeur pourrait être modulée par la demande de chauffage. En dessous de ce seuil, le moteur thermique 1 est redémarré.

Les principes de base du procédé selon la présente invention étant simples, basés sur des approximations physiques, et non pas le résultat de méthodes d'optimisation complexes, l'adaptation de ce procédé à de nouvelles applications est aisée.

L'algorithme de base pour l'élaboration de ce procédé étant simple, comparé aux stratégies utilisées actuellement dans les prototypes de véhicule hybride, la puissance nécessaire des calculateurs embarqués dans l'unité de commande du dispositif de gestion, selon la présente invention, sera réduite.

La prise en compte des transitoires thermiques dans le procédé, selon la présente invention, permet une augmentation des prestations en roulage électrique et ceci à un coût nul.

L'invention n'est nullement limitée au mode de réalisation décrit et illustré qui n'a été donné qu'à titre d'exemple.

**Revendications**

1. Procédé de gestion d'énergie d'une chaîne de traction d'un véhicule hybride comportant plusieurs éléments (1 à 5) dont un moteur thermique (1) et au moins une machine électrique (3) pouvant servir de moteur électrique, ce procédé comprenant l'étape de détermination en temps réel du gain (G) de consommation en carburant du moteur thermique (1) en effectuant la différence entre consommation en mode thermique (Conso) et consommation (Conso$_{équivalente}$) estimée en mode électrique, **caractérisé en ce que** la détermination du gain (G) de consommation est fonction d'un ou de paramètres de fonctionnement d'au moins un ou une partie des éléments (1 à 5) de la chaîne de traction, **en ce que** le paramètre ou un des paramètres de fonctionnement pris en compte est la température respective d'un ou d'une partie des éléments (1 à 5) de la chaîne de traction et **en ce que** le ou les éléments (1 à 5) de la chaîne de traction dont la température est prise en compte pour le calcul des pertes sont la ou les machines électriques (3) et/ou les moyens de stockage (4) d'énergie, la consommation (Conso$_{équivalente}$) estimée en mode électrique étant égale à la puissance à la roue augmentée desdites pertes, ceci multiplié par un coefficient de proportionnalité K.

2. Procédé selon la revendication 1, **caractérisé en ce que** le gain (G) s'exprime de façon suivante :

$$G_{(g/s)} = Conso - K\left[\frac{Pmth}{\eta_{elec}}\right]$$

où

Conso est la consommation du moteur thermique (1),
Pmth = puissance fournie par le moteur thermique
K = coefficient de proportionnalité défini par cartographie prédéterminée du moteur thermique
$\eta$elec = rendement de la chaîne électrique, ce rendement étant fonction d'un ou de paramètres de fonctionnement de la chaîne de traction, de préférence la température respective d'au moins un ou une partie des éléments (1 à 5) de la chaîne de traction.

3. Procédé selon l'une quelconque des revendications précédentes, ladite chaîne de traction comportant dans ses éléments des moyens (3) de récupération d'énergie et des moyens de stockage (4) d'énergie, **caractérisé en ce qu'**il comprend une étape d'arrêt ou de fonctionnement du moteur thermique (1) en fonction d'un ou de critères ainsi que du gain (G) de consommation, une condition nécessaire mais non suffisante pour l'arrêt du moteur thermique (1) étant un gain (G) de consommation positif.

4. Procédé selon la revendication 3, **caractérisé en ce qu'**il comprend une étape de maintien du moteur thermique (1) en fonctionnement même si le gain (G) est positif, le critère ou l'un des critères de fonctionnement étant dépendant du niveau de récupération des moyens de récupération (3) d'énergie électrique et/ou des moyens de stockage (4) d'énergie électrique, ce critère impliquant la suspension de l'arrêt du moteur thermique (1) tant que l'énergie électrique stockée dans les moyens de stockage (4) d'énergie n'a pas atteint une valeur prédéterminée.

5. Procédé selon la revendication 3 ou 4, **caractérisé en ce qu'**il comprend une étape de maintien du moteur thermique (1) en fonctionnement même si le gain (G) est positif, le critère ou l'un des critères de fonctionnement étant dépendant de la température de l'huile de lubrification du moteur thermique (1), ledit critère impliquant la suspension de l'arrêt du moteur thermique (1) tant que la température de son huile de lubrification n'a pas atteint une valeur prédéterminée.

6. Procédé selon l'une quelconque des revendications précédentes, au moins un groupe moto-ventilateur étant prévu pour le refroidissement du moteur thermique (1), **caractérisé en ce qu'**il comprend une étape de régulation de la puissance et/ou de la fréquence de déclenchement du groupe ou des groupes moto-ventilateurs pour le refroidissement du moteur thermique (1) afin que la température de celui-ci ne descende pas en dessous d'une température prédéterminée, notamment lorsqu'il est à l'arrêt provisoire.

**Patentansprüche**

1. Verfahren zur Energieverwaltung eines Zugantriebsstrangs eines Hybridfahrzeugs, das mehrere Elemente (1 bis 5) aufweist, darunter ein Verbrennungsmotor (1) und mindestens eine elektrische Maschine (3), die als Elektromotor dienen kann, wobei dieses Verfahren den Schritt des Bestimmens in Echtzeit der Erhöhung (G) des Kraftstoffverbrauchs des Verbrennungsmotors (1) aufweist, indem der Unterschied zwischen dem Verbrauch im thermischen Modus (Conso) und dem geschätzten Verbrauch (Conso$_{äquivalent}$) im elektrischen Modus bestimmt wird, **dadurch gekennzeichnet, dass** das Bestimmen der Erhöhung (G) des Verbrauchs von einem oder mehreren Betriebsparametern mindestens eines Elements oder eines Teils der Elemente (1 bis 5) des Zugantriebsstrangs abhängt, dass der Betriebsparameter oder einer der Betriebsparameter, der/die berücksichtigt wird/werden, die jeweilige Temperatur eines oder eines Teils der Elemente (1 bis 5) des Zugantriebsstrangs ist, und dass das oder die Elemente (1 bis 5) des Zugantriebsstrangs, dessen/deren Temperatur für die Berechnung der Verluste berücksichtigt wird, die elektrische Maschine(n) (3) und/oder die Energiespeichermittel (4) sind, wobei der geschätzte Verbrauch (Conso$_{äquivalent}$) im elektrischen Modus gleich der Leistung an dem Rad erhöht um die Verluste ist, wobei dies mit einem Proportionalitätskoeffizienten K multipliziert wird.

2. Verfahren nach Anspruch 1, **dadurch gekennzeichnet, dass** die Erhöhung (G) wie folgt ausgedrückt wird:

$$G_{(g/s)} = Conso - K\left[ \frac{Pmth}{\eta_{elec}} \right]$$

wobei

Conso der Verbrauch des Verbrennungsmotors (1) ist,
Pmth = von dem Verbrennungsmotor gelieferte Leistung,
K = Proportionalitätskoeffizient, definiert durch vorbestimmte Kartographie des Verbrennungsmotors,
$\eta$elec = Leistung des elektrischen Strangs ist, wobei diese Leistung von einem oder mehreren Betriebsparametern des Zugantriebsstrangs abhängt, vorzugsweise von der jeweiligen Temperatur mindestens eines oder eines Teils der Elemente (1 bis 5) des Zugantriebsstrangs.

3. Verfahren nach einem der vorhergehenden Ansprüche, wobei der Zugantriebsstrang in seinen Elementen Mittel (3) zur Energierückgewinnung und Mittel zur Energiespeicherung (4) aufweist, **dadurch gekennzeichnet, dass** es einen Stopp- oder Betriebsschritt des Verbrennungsmotors (1) in Abhängigkeit von einem oder mehreren Kriterien sowie von der Erhöhung (G) des Verbrauchs aufweist, wobei eine Bedingung, die für das Stoppen des Verbrennungsmotors (1) erforderlich aber nicht ausreichend ist, eine positive Erhöhung (G) des Verbrauchs ist.

4. Verfahren nach Anspruch 3, **dadurch gekennzeichnet, dass** es einen Schritt des Aufrechterhaltens des Betriebs des Verbrennungsmotors (1) aufweist, sogar wenn die Erhöhung (G) positiv ist, wobei das Betriebskriterium oder eines der Betriebskriterien von dem Rückgewinnungsniveau der Rückgewinnungsmittel (3) elektrischer Energie und/oder der Speichermittel (4) elektrischer Energie abhängt, wobei dieses Kriterium das vorübergehende Aufheben des Stoppens des Verbrennungsmotors (1) bedingt, solange die in den Energiespeichermitteln (4) gespeicherte Energie nicht einen vorbestimmten Wert erreicht hat.

5. Verfahren nach Anspruch 3 oder 4, **dadurch gekennzeichnet, dass** es einen Schritt des Aufrechterhaltens des Betriebs des Verbrennungsmotors (1) aufweist, sogar wenn die Erhöhung (G) positiv ist, wobei das Betriebskriterium oder eines der Betriebskriterien von der Schmieröltemperatur des Verbrennungsmotors (1) abhängt, wobei das Kriterium das vorübergehende Aufheben des Stoppens des Verbrennungsmotors (1) aufweist, solange die Temperatur seines Schmieröls nicht einen vorbestimmten Wert erreicht hat.

6. Verfahren nach einem der vorhergehenden Ansprüche, wobei mindestens ein Lüftersatz für das Kühlen des Verbrennungsmotors (1) vorgesehen ist, **dadurch gekennzeichnet, dass** es einen Regelschritt der Leistung und/oder der Auslösefrequenz des oder der Lüftersätze zum Kühlen des Verbrennungsmotors (1) aufweist, damit seine Temperatur nicht unter eine vorbestimmte Temperatur sinkt, insbesondere wenn er sich im vorläufigen Stillstand befindet.

**Claims**

1. A method for managing the energy of a power train of a hybrid vehicle comprising several elements (1 to 5), including a heat engine (1) and at least one electrical machine (3) able to serve as an electric motor, this method including the step of determining in real time the fuel consumption gain (G) of the heat engine (1) by effecting the difference between consumption in thermal mode (Conso) and estimated consumption (Conso$_{equivalent}$) in electric mode, **characterized in that** the determining of the consumption gain (G) is a function of one or more operational parameters of one or a portion of the elements (1 to 5) of the power train, **in that** the operational parameter or one of the operational parameters taken into account is the respective temperature of one or a portion of the elements (1 to 5) of the power train and **in that** the element or elements (1 to 5) of the power train, of which the temperature is taken into account for the calculation of the losses are the electrical machine(s) (3) and/or the energy storage means (4), the estimated consumption (Conso$_{equivalent}$) in electric mode being equal to the power at the wheel increased by the said losses, this being multiplied by a proportionality coefficient K.

2. The method according to Claim 1, **characterized in that** the gain (G) is expressed in the following manner:

$$G_{(g/s)} = Conso - K\left[\frac{Pmth}{\eta_{elec}}\right]$$

where

Conso is the consumption of the heat engine (1),
Pmth = the power supplied by the heat engine
K = proportionality coefficient defined by predetermined mapping of the heat engine
$\eta$elec = efficiency of the electrical power train, this efficiency being a function of one or more operational parameters of the power train, preferably the respective temperature of at least one or a portion of the elements (1 to 5) of the power train.

3. The method according to any one of the preceding claims, the said power train comprising in its elements means (3) for recuperating energy and means (4) for storing energy, **characterized in that** it includes a step of stopping or of functioning of the heat engine (1) as a function of one or more criteria and as a function of the consumption gain (G), a necessary but not sufficient condition for stopping the heat engine (1) being a positive consumption gain (G).

4. The method according to Claim 3, **characterized in that** it includes a step of keeping the heat engine (1) in operation even if the gain (G) is positive, the operating criterion or one of the operating criteria being dependent on the level of recuperation of the electric energy recuperation means (3) and/or of the electric energy storage means (4), this criterion involving the suspension of the stoppage of the heat engine (1) as long as the electric energy stored in the energy storage means (4) has not reached a predetermined value.

5. The method according to Claim 3 or 4, **characterized in that** it includes a step of keeping the heat engine (1) in operation even if the gain (G) is positive, the operating criterion or one of the operating criteria being dependent on the temperature of the lubricating oil of the heat engine (1), the said criterion involving the suspension of the stoppage of the heat engine (1) as long as the temperature of its lubricating oil has not reached a predetermined value.

6. The method according to any one of the preceding claims, at least one fan unit being provided for cooling the heat engine (1), **characterized in that** it includes a step of regulation of the power and/or of the activation frequency of the fan unit or units for cooling the heat engine (1) so that the temperature thereof does not fall below a predetermined temperature, in particular when it is temporarily stopped.

_Fig.1_

Couple (N.m)

$G = 0$ à $T°_2$

$G = 0$ à $T°_1$

$T°$

$T°_2 < T°_1$

Régime (tr/min)

_Fig.2_

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008053107 A